# EUROPEAN PATENT SPECIFICATION

(11) **EP 2 984 604 B1**
(45) Date of publication and mention of the grant of the patent: **20.09.2017**
(21) Application number: 14717449.4
(22) Date of filing: 14.04.2014
(51) Int. Cl.: G06K 19/06

(54) **A CARD WITH AN OFFSET FIELD GENERATOR**
KARTE MIT EINEM VERSETZTEN FELDGENERATOR
UNE CARTE COMPRENANT UN GÉNÉRATEUR DE CHAMP DÉCALÉ

(30) Priority: 12.04.2013 WO PCT/EP2013/057666
(43) Date of publication of application: 17.02.2016
(73) Proprietor: Cardlab ApS, 2730 Herlev (DK)
(72) Inventor: NIELSEN, Finn, 2300 Copenhagen S (DK); SPEIERMANN, Finn, 2830 Virum (DK)
(74) Representative: Inspicos P/S
(86) International application number: PCT/EP2014/057506
(87) International publication number: WO 2014/167137

(56) References cited:
- EP-A2- 0 373 411
- US-A1- 2012 187 199
- US-B1- 8 376 239

## Description

The present invention relates to a card, such as a credit card, an ID card or the like which is configured to output or provide an electromagnetic field along a predetermined curve on or at a surface thereof. This type of card may emulate an old-fashioned credit card with a magnetic stripe having one or more tracks of signals encoded in the magnetic stripe, but unlike the static magnetic stripe, a field generator is provided for outputting a modulated field emulating that sensed by a reading head moving along a track of the old-fashioned credit/ID card.

Credit cards of this type may be seen in e.g. US2012/187199, WO01/52204, EP1326196, US6325285, WO01/3157 WO00/49561, EP0994439, US2004/133787, EP1231562, US2003/106935, GB2243235, US4158433, DE19648767, DE19618144, US5627355, CA2317642, US6715679, CA2317642, US7278025, US4829166, US4825056, US2002/032657, RU2062507, US5563948, RU2216114, US6657538, US4304992, US2004/0035942, US2007/0176622, US6607362, US2004/0129787, US2006/0283958, and US2006/0091989.

A first aspect of the invention relates to a card according to claim 1

In this context, a card may have the same dimensions as a credit card, as e.g. defined in ISO/IEC 7810 ID-1: 85.60x53.98mm, with a thickness of 0.76mm, as is the most widely used dimension for banking and ID cards. The present card thus preferably is a flat, thin, rectangular card configured to be received in ATMs and other card readers used for entrance control, funds transfer, banking operations, cash withdrawal and the like. These card readers may be swipe type readers where a user is requested to swipe the card through a slit, inside which a card reading head is positioned, or readers configured to receive a card into a slot of a housing and which automatically translate or move the card to a reader head provided inside the housing.

The present card preferably is bendable and generally fulfils other parts of ISO/IEC 7810 ID-1, such as the bendability and dimensional stability. This standard also relates to flammability, toxicity, resistance to chemicals, resistance to deterioration from exposure to light and heat, as well as the durability of the card. Naturally, these requirements are also desired fulfilled, but such demands may differ from situation to situation, whereby such requirements may not always be required fulfilled.

Naturally, other card shapes or dimensions may be selected outside this standard, which is widely used but in no way a limitation to the invention. Thus, cards of other shapes, such as square, triangular, circular, oval and with other thicknesses and other dimensions are equally useful in accordance to the invention.

The card is configured to provide an electromagnetic field along a predetermined straight line on or at a surface of the card. The intention is to emulate the operation of an old-fashioned credit card when a reading head is translated along the magnetic strip thereof and over the line. However, differences exist. For example, the present field of the card according to the invention need not vary along the length of the line. Instead, the field may be made to vary over time, so that a reading head, moving in relation to the card or stationary, may detect a varying electromagnetic field. In fact, typically the same signal and field is output over all of the line at any point in time. Thus, the actual position of the reader in relation to the line may be irrelevant or of little relevance.

The positions of these curves or tracks may be as defined in e.g. ISO7811-2 in relation to cards with the dimensions as defined above.

In this context, the straight line will usually start and end within the boundaries of the card, such as within the outer boundaries of the card when seen directly from above a main surface or side thereof.

The straight line may or may not be indicated on the card surface. The card surface usually will be a major surface of the card, such as one of the largest surfaces of the card where, often, printed information, such as logos and the like, is provided. Often, the surface is flat or plane.

The straight line is a line at which the electromagnetic field is desired or required. Thus, the line may be a track on the card directly over which a reading head or coil is supposed to be translated for detecting the field emitted by the card. Consequently, the line often will be defined or dictated by a reader or a standard defining the relative positions of the card and a reading head/coil.

The card has an elongated or oblong field generator. In this context, the field generator is oblong, if its largest dimension (longitudinal axis) e.g. is more than twice the size of a largest dimension perpendicular to an axis of the longest dimension (longitudinal axis). The field generator may be straight or have any other shape, such as a bent shape, a U-shape, a V-shape, an S-shape or the like.

In this context, the field generator is an element or device configured or able to output an electromagnetic field. A typical field generator comprises a coil which is suitable for converting an electrical signal into an electromagnetic field. The coil may therein have a core if desired. Naturally, this coil may be replaced by a number of coils or one or more other elements configured to convert an electrical or optical signal into an electromagnetic signal. In the latter situation, the coils preferably have longitudinal axes at least substantially parallel with the card plane and form a series or row of coils.

Preferably, the generator/coil has a central axis at least substantially parallel to plane of a major surface of the card, or the generator/coil is positioned in a generator/coil plane at least substantially parallel to the card plane.

The field generator has at least two end portions configured to output at least part of the electromagnetic field. A coil e.g. will output an electromagnetic field from the ends thereof, but an electromagnetic field may also be output along a length of the coil.

The end portions may be end portions of a coil or outer or extreme end portions of outer or extreme coils of a number of coils, if the elongated field generator comprises a number of coils. The end portions may alternatively be end portions of one or more cores provided inside the coil(s) if desired, cf. below. An end portion may be defined by the extreme or outermost 10%, such as the extreme or outermost 1% of the length of the field generator.

Each end portion has an edge or part in the projection. This edge may be defined by a portion of or at the end portion which extends in a longitudinal direction of the oblong field generator. This may be a part of a longer side of a rectangle and at a corner, where the shorter sides define the end portions. Alternatively, the edge may be a part of the end portion which is the closest to the line.

The end portions are no more than 0.5mm from the straight line and have a width of at least 1.8mm perpendicularly to the longitudinal axis or direction of the generator. Usually, this width is along a direction parallel to a major surface of the card. This width may be at least 2mm and often around 2.4-2.5mm or more. Naturally, this width may be preferred in all embodiments of the invention.

When the generator comprises a coil, the width may be an outer diameter thereof or a width of a core material in the coil, if existing.

This edge may be positioned no more than 0.5mm from the predetermined line, so that an overlap between, in the projection, the line and the end portions is allowed, as long as it is of this small size.

Alternatively, no overlap may exist so that the end portions, in the projection, are provided at one side of the line.

In one embodiment, not only the edge or outer boundary at the end points but also along the length of the generator may fulfil the requirement that is either is no more than 0.5mm from the line, or the line has, in the projection, no overlap with the outline of the generator.

Naturally, this distance may also be described as an angle between e.g. the card surface and a straight line from an end point and a point on the line on the surface, where the point on the line is that the closest to the end point. This line usually will intersect the card surface, as the end points usually will be provided inside the card and the line at or on the surface. This angle will describe both the depth at which the end points are provided as well as the above distance. Again, the angle, when sufficiently different from 90 degrees, will describe under which angles the field from the end points enter a reading head.

The card may comprise a controller configured to output to the generator an electrical signal which, in the generator, may be converted into the electromagnetic field - preferably a field varying over time and having therein information to be output from the card. This information may be the information or the type(s) of information output by standard credit/ID cards.

In one embodiment, the card has an outer, at least substantially straight side and wherein the line may be a straight line positioned between 6.9mm and 7.2mm from the side. This is the position of the first track of a card according to ISO/IEC 7811-2 card. Hitherto, great effort has been made to provide the field generator directly below this line, but according to the invention, this is not an advantage.

In one embodiment, the end portions are positioned, when projected on to the plane, no more than 5mm from the predetermined line. This distance may be no more than 4.5mm, no more than 4mm, for example. If this distance becomes too large, the field available for a reading head at the line may be insufficient.

In one embodiment, the line is an at least substantially straight line extending between a first line end point and a second line end point on or at the surface and wherein the end portions are positioned so that the first and second line end points, when projected on to a straight line through the end portions, are positioned between the end portions. Thus, the end portions are provided on either side of the extreme positions of the line, so that if a reading head moves along the line, it will experience the field lines exiting one end portion and directed toward the other end portion. This is irrespective of whether the end portions are those of one or more core materials and/or one or more coils.

In one embodiment the field generator comprises a core material extending within a coil, as mentioned earlier. This core material, or a plurality of core materials if provided, preferably extends within a plane at least substantially parallel to the surface of the card. If a core material is used, it may also form part of the end portions.

Normally, the coil(s) is/are wound around the core material(s) in order for the coil(s) to generate a field in the core material(s).

In one situation, the card may be configured to provide an additional electromagnetic field, which is usually independent of the above-mentioned electromagnetic field, along a second predetermined curve on or at the surface, the card comprising a second oblong field generator with two second end portions, which have the width described above, configured to output at least part of the additional electromagnetic field, the second field generator comprising a second coil,
wherein the second end portions are positioned so that, when projected on to the plane of the surface:
- an edge of each second end portion is positioned no more than 0.5mm from the second predetermined curve and/or
- the second predetermined curve does not overlap the second end portions in the projection.

Usually, the predetermined line and the predetermined second curve are parallel.

The considerations in relation to the relative positions of the first end portions and the first line are equally valid in relation to the second curve and the second end portions.

In a preferred embodiment, the second curve is a straight line positioned between 10.2 and 10.5mm from the above straight side, which is the position of the second track according to the ISO/IEC 7811-2 standard.

In some situations, it is desired to have the card further have a compensating field generator having a first and a second compensating field outputs, wherein the end portions and the compensating field outputs are positioned, when projected on to the plane, so that the end portions are provided on one side of the second curve and the compensating field outputs on an opposite side of the second curve.

Preferably, not only the compensating field outputs but the full compensating field generator, which may of the same type of generator as described above, is positioned to one side of the curve, in the projection, so that all fields emitted by this generator are provided from one side of the second curve. In the same manner, it is preferred that the full field generator of the card is provided on the other side of the second curve.

A compensating field generator may be used for outputting a field, at the second curve, counter-acting the field output by the field generator for use in the first curve but which will also be present, usually to a smaller degree or with a smaller field strength, at the second curve. Thus the compensating field generator may be operated to remove or cancel out this contribution of the field detected at the second curve.

Generally, the compensating field generator may be provided along the guidelines given above for the field generators.

An alternative, or an addition, to the use of compensating field generators may be the subtraction of a signal, in an output from a reading head or coil, of a signal corresponding to that output by the field generator for use at the first curve.

A further alternative or addition is to alter the field output by the second field generator (or a signal fed thereto) in a manner so as to counter-act the field from the field generator for use at the first curve.

As indicated above in relation to the field generators, it is also desired that the compensating field generator(s) be positioned no more than 5mm from the pertaining curve.

Naturally, a compensating field generator may be provided for each curve.

When the card comprises a signal generator configured to feed a signal to one or more field generators, this may also be used for feeding one or more compensating field generator(s).

A second aspect of the invention relates to an assembly according to claim 7.

In this context, the reading head may comprise a reading coil or detector configured to convert sensed/detected electromagnetic field into an output signal, which usually will be electrical but which may equally well be optical, wireless, radio-based, an audio signal or the like.

This reading coil or the reading head is configured to be positioned, relative to the card, directly above the straight line. The straight line, which may be the above predetermined straight line, may be a portion of the card directly over which the reading coil/head may be translated. In this context, the reading head/coil is the actual detecting portion of the reader and not including e.g. a housing or the like. Usually, the detector is a coil. In other situations, a coil is connected to an air gap in a magnetic circuit, where the gap is configured to guide magnetic field lines to the coil. Thus, the gap is the actual element defining the straight line. The straight line may be defined by a predetermined point, such as a centre, of the outline of the reading coil or gap in the projection and the translation of the reading head in relation to the card.

Most card readers are originally configured to provide or facilitate a relative movement of the card and reading head so that the reading head or reading coil travels along and directly above the straight line of the card. This is not a disadvantage according to the invention but it is not a requirement. The reading head and/or reading coil may be stationary in relation to the card while detecting the field output, but the reading head/coil is still to be positioned directly above the curve.

In this context, the reading head is over the straight line if it is positioned directly above this, i.e. a line perpendicular to the surface and intersecting the surface at the straight line will intersect the reading head.

The card of the assembly may be the card of the first aspect of the invention, where the predetermined straight line is defined by the position of the reading head/coil/gap.

In one situation where the card has a second field generator, the reading head preferably comprises at least a first and a second field sensor, such as sensing coils, where the first field sensor is configured to be positioned over the straight line and the second field sensor is configured to be positioned over another curve, which may be the above second curve.

Naturally, the reading head may be translated in relation to the card to have the field sensors travel along the curves.

Also, the reading head may, if desired, touch or contact the surface of the card during the sensing of the field(s) emitted.

A third aspect of the invention relates to a method of outputting a signal from a card according to the first aspect of the invention, the method comprising the step of operating the field generator to output a magnetic field.

The above description of the curve, the generator etc. is equally valid in relation to the third aspect.

In one embodiment, the operating step comprises operating the field generator to output a magnetic field which varies over time. In this manner, the reading head may be stationary over the curve or may move over or along the curve with any desired speed while detecting and outputting the desired signal.

A final aspect of the invention relates to a method according to claim 11.

The above description of the straight line defined by the reading head, usually a coil or gap, and that it may be identical to the above curve, as well as the generator and the relative positions are equally valid in relation to this aspect.

The operating of the field generator may be feeding an electrical signal thereto, where the field generator is operational to convert the electrical signal into an electromagnetic signal. Preferably, the field generator is able to convert any time dependency or variation into a corresponding field strength dependency or variation. A typical field generator is a coil, optionally with a core material therein.

Thus, information may be encoded in the electrical signal, which information is present also in the field generated and thus in an output signal from the card reader, such as the reading head.

The positioning step may comprise, as mentioned above, abutting the card reader and the card. Alternatively, a distance there between may be e.g. no more than 1mm, preferably no more than 500µm, preferably no more than 250µm, such as no more than 100µm. Preferably, the distance between the head and the card is maintained at least substantially constant during the operating step.

The operating step comprises the head sensing the field output by the generator.

In one embodiment, the positioning step comprises translating the reading head in relation to the card, where the translation defines the position of the elongate portion, and thus potentially the above curve, on the card.

In the following, preferred embodiments of the invention will be described with reference to the drawings, wherein:
- figure 1 illustrates a credit card with a magnetic stripe,
- figure 2 illustrates the standardized positions of the individual magnetic tracks of a magnetic card,
- figure 3 illustrates the relative positions of an encoder and a track position,
- figure 4 illustrates two field generators on a card, including compensating coils,
- figure 5 illustrates a cross section of a card according to the invention, and
- figure 6 illustrates relative positioning of a curve and an end point of a generator.

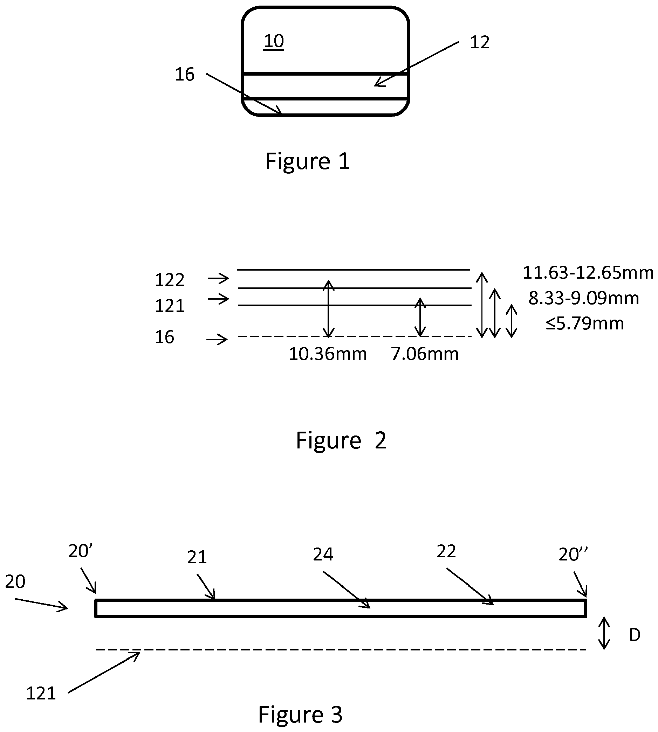

In figure 1, a standard credit card 10 is illustrated having a magnetic area 12 positioned in a predetermined and standardized position. The magnetic area 12 typically may comprise two individual strips or signal tracks, 121 and 122, of magnetically encoded information. The positions of these strips or tracks, 121, 122 also is standardized.

According to ISO/IEC 7811-2:2001, the track 121, positioned the closest to the nearest longitudinal side 16 of the card 10 (see figure 2), has an edge closest to the side 16 of no more than 0.228" (5.79mm). The boundary between the first and second tracks 121/122 is between 0.328" (8.33mm) and 0.358" (9.09mm) from the edge 16. The second track 122 extends to between 0.458" (11.63mm) and 0.498" (12.65mm) from the edge 16. A minimum track width is 0.100" (2.45mm).

Different sources identify slightly different centre distances from the edge 16 to a centre of the tracks 121 and 122, but the following distances are seen: a distance from edge 16 to centre of track 121: (0.228"+0.328")/2 = 0.278" (7.06mm), a distance from edge 16 to centre of track 122: (0.358"+0.458")/2 = 0.408" (10.36mm).

Naturally, the tracks 121/122 may be positioned along any curves on the card. The straight lines are preferred as they facilitate a linear swipe or translation of the card in relation to the reader.

The preferred embodiments of the card of the invention have one or more magnetic encoders or field generators positioned at or near the track positions of the card. These encoders are able to generate an electromagnetic field emulating that of a legacy magnetic stripe of a card translated in relation to a reader.

In figure 3, an encoder strategy is seen wherein a single encoder 20 is provided having a coil 22 and a core 24, if desired, extending along, preferably parallel to, the curve 121, which may be a centre line of a track, if the track has a width.

The ends 20' and 20" of the coil 22 or core 24, which ever extends the farthest to the right and to the left, defines end points at which a large part of a generated electromagnetic field is output and which will travel to the other end point in a manner defined by the surroundings and the card 10.

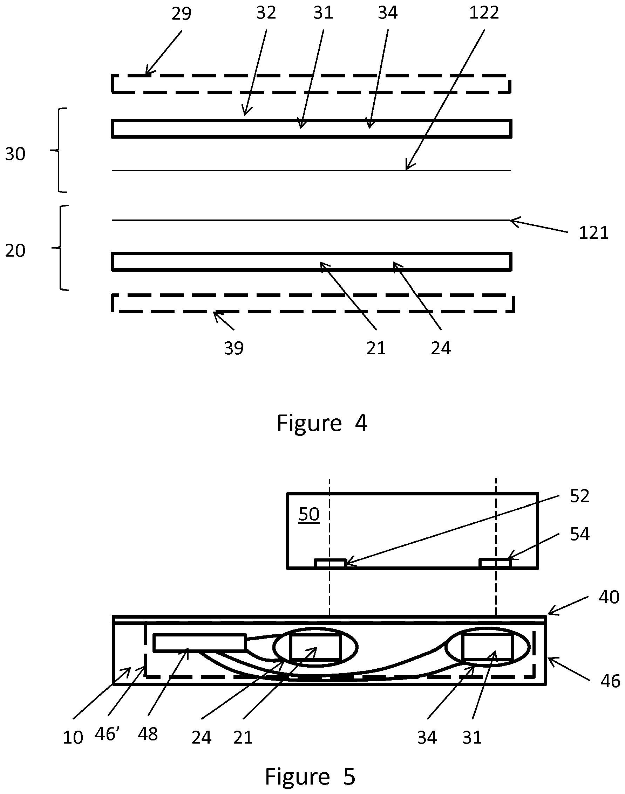

According to the invention, the ends 20' and 20" of the coil 22 and/or core 24 of the encoder 20 are provided at a distance D from the curve 121. This distance D preferably may be from - 0.5mm (i.e. with a small overlap) and to several mms. Preferably, the distance D is about 2mm, but it has been found that improvements of the signal output of a reading head (see figure 5) are significant even when there is an overlap and the distance is -0.5mm. It has been found that the angle under which the field lines from the encoder 20 enter the coil of the reading head in general improves by this offset, especially as it has been found that the coils of most reading heads are not perfectly aligned with the track 121 but is slightly angled in relation thereto. It is desired that the distance, when negative (overlap), is not half a width of the encoder end 20'/20", so especially when an overlap exists, the encoder ends preferably have a width of at least 1.8mm. This width may be larger if desired.

It is noted that the main field emitted by the encoder 20 is output by the ends 20' and 20". Thus, when the positions of the ends 20' and 20" are fixed, any shape may, in principle, be used for the remainder of the encoder 20. An alternative to the straight encoder 20 of figure 3 is a bent or curved encoder, such as an encoder forming part of a circle, an oval or the like.

However, it has been found that the encoder does, in fact, also output a field between the ends. This field may be utilized in order to e.g. compensate from a field strength variation seen between the ends 20' and 20". The field sensed at a position along the track 121 is a sum of the field from the ends 20' and 20" as well as that output along the length of the encoder 20 and thus may be slightly larger at the centre of the track 121. Thus, in one embodiment, core 22/coil 24 may be shaped to bend away from the track 121 to at degree so that the field strength sensed along the track 121 is the same.

In another embodiment, the encoder may simply have the same shape as the emulated track, i.e. preferably straight, with the same distance to the track all along its length.

In figure 4, an encoder scheme is illustrated comprising, in addition to the encoder 20, a second encoder 30 as well as compensating elements to be described in further detail.

For illustrative purposes, the encoders 20 and 30 are different. A large variation in encoder schemes, as will also be described further below, may be used. Usually, identical encoder types are used in the same card.

The encoder 20 comprises a field generating element 22 comprising an oblong core material 21 and a coil 24 wound around the core material 21.

The operation of the encoder 20 is that a signal, corresponding to the electromagnetic field to be sensed by the reading head of a reader, which reading head travels along or over the track 121, is transmitted into the coil 24. As a result thereof, the coil 24 and core 21 outputs an electromagnetic field which is sensed by the reading head. As is also indicated above, it is preferred that the distance between the coil 24/core 21 to the track position is about the same along the length thereof. This, however, is not a requirement.

The encoder 30 comprises a field generating element 32 with a core 31 and a coil 34 also positioned according to the invention in relation to another of the standardized positions, 122, of magnetic tracks of credit cards.

In addition to the encoders 20/30, cross talk reducing coils 29/39, which may have cores or not, may be provided in order to prevent cross talk from one encoder to the other when operated simultaneously.

The function of the cross talk reducing coil 29 is to create an electromagnetic field at the track 122 to counter the field created at the guide by the encoder 20 at the track 122 when operating to generate the desired field at the track 121. Thus, it is desired that the resulting field from the encoder 20 and the cross talk reducing coil 29, at the track 121, is zero or as low as feasible.

The operation of the cross talk reducing coil 39 is similar.

An alternative to the operation of the cross talk reducing coils 29/39 is the subtraction, in the signal fed to the encoder 20, for example, of a signal correlated to that fed to the encoder 30 in order for the encoder 20 to, itself, output a field counter acting that of the encoder 30 at the track 121.

In figure 5, a card 10 is illustrated in a cross section perpendicular to the coils and cores. Illustrated is also electronics 48 for feeding electrical signals into the coils. The cross talk reducing coils 29/39 are not illustrated but may be provided or not. These usually are also fed by the electronics 48, but this is not a requirement.

Also illustrated is a reading head 50 comprising two reading coils 52 and 54 each positioned so as to travel along the tracks 121/122 while individually receiving the fields output by the encoders 20/30, respectively. Usually, the reading coils 52/54 are positioned directly above (perpendicularly to the upper surface of the card) the track positions 121/122.

In figure 5, the positions, in this cross section, of the curves are illustrated by two vertical lines extending perpendicular to the upper card surface. It is seen that the coils 52/54 are positioned directly over the curves, as the lines intersect the centres of the coils 52/54. Thus, the centres of the coils 52/54 define the curves together with the path travelled by such points during swiping of the card. Alternatively, the curves may be defined by other points related to the coils 52/54, or predetermined points in relation to other parts of the head, such as an air gap provided for receiving magnetic field lines and guide these toward the coils 52/54.

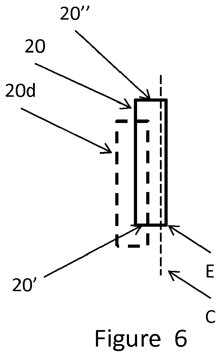

Also, it is seen that the cores 21/31 and coils 24/34 are not positioned directly under these curves, as their centres are offset therefrom (see figure 6).

Assembly of the card 10 may be performed by providing a base element 46 which may have en indentation or cut-out portion 46' into which a pre-assembled electronic package comprising the electronics 48, coils, cores and connecting wires may be provided. This package may comprise additional elements, such as a battery, a biometric reader, such as a finger print reader, one or more displays, one or more transmitters/transceivers, such as wireless transmitters/transceivers, such as a Bluetooth transceiver, a Wi-Fi transceiver, an RF transceiver or the like, antennas, a keyboard, one or more switches, such as blister switches or piezo based switches (see e.g. WO2008/104567) or the like.

The cut-away and/or electronics may be covered by one or more layers or sheets 40.

The preferred properties of the encoder 20 may be divided into those of the coil 24 and the core 21.

Naturally, a core 21 may be provided or not.

One or more coils 24 may be provided along the length of the core 21 or between the ends 20' and 20". A single coil may be used, in which case it preferably extends at least 70%, such as at least 80%, such as at least 90% of a distance, along the track, between the ends 20' and 20".

Multiple coils may be provided with or without one or more cores. The one or more coils may be driven with the same signal or may be individually driven, such as on the basis of a position of the reading head. Such position determination is known in the art.

In addition, the one or more coils may have the same pitch along the length thereof, or the pitch may be altered along the length in order to control the field strength emitted along the length of the coil.

As to the core, this is preferably capable of transporting a large field strength without the material saturating. Different materials have different B-H curves describing the flux density as a function of magnetic field strength. A material with a straight B-H curve may be the VC6025Z (from www.VacuumSchmelze.de) which has a rather sharp "saturation corner", whereas mu-metal has a much softer characteristic. In the latter situation, the field strength may be kept sufficiently low for it to be in a linear area. Alternative, this non-linear characteristic may be compensated for either in the signal or in the signals resulting from the detection.

Preferably, the permeability of the core material is 100-100,000 µr, such as 5,000-15,000µr, such as around 10,000µr. µr being the permeability relative to that of vacuum, µ0.

The sharper corner of the VC6025Z material will cause a higher distortion in case of saturation but may carry more field strength before distorting the output field.

In figure 6, the offset of a generator 20 from a curve C is seen in the situation where both are straight, in a projection on to the surface of the card.

Again, the generator has end portions 20' and 20", and an edge E is illustrated being a portion of the end portion 20' being the closest to the curve C. It is seen that the generator 20 is displaced in relation to the curve C, even though an overlap exists.

Also illustrated is another possible, more displaced, position 20d of the generator. It is seen that no overlap exists. Naturally, when no overlap exists, any distance may be seen between the edge E and the curve C.

## Claims

1. A card (10) having an outer, at least substantially straight side (16) and being configured to provide an electromagnetic field along a straight line (121, 122) on or at a surface thereof, the straight line being at least substantially parallel to the side and positioned between 6.9mm and 7.2mm from the side or between 10.2 and 10.5mm from the side, the card comprising an oblong field generator (20,30) comprising at least two end portions (20', 20") configured to output at least part of the electromagnetic field,
**characterized in that** the end portions have a width, perpendicular to a longitudinal direction of the field generator, of at least 1.8mm and are positioned so that, when projected on to a plane of the surface:
- an edge of each end portion is positioned no more than 0.5mm from the straight line and/or
- the straight line does not overlap the end portions in the projection.

2. A card according to any of the preceding claims, wherein the straight line extends between a first end point and a second end point on or at the surface and wherein the end portions are positioned so that the first and second end points, when projected on to a straight line through the end portions, are positioned between the end portions.

3. A card according to any of the preceding claims, wherein the field generator comprises a core material (22) extending within a coil (24).

4. A card according to any of the preceding claims, the card being configured to provide an additional electromagnetic field along a predetermined curve on or at the surface, the card comprising a second oblong field generator (30) with two second end portions having a width, in a direction perpendicular to a longitudinal direction of the generator, of at least 1.8mm and being configured to output at least part of the additional electromagnetic field,
wherein the second end portions are positioned so that, when projected on to the plane of the surface:
- an edge of each second end portion is positioned no more than 0.5mm from the predetermined curve and/or
- the predetermined curve does not overlap the second end portions in the projection.

5. A card according to claim 4, wherein the curve is a straight line being at least substantially parallel to the side and positioned between 10.2mm and 10.5mm from the side.

6. A card according to claim 4 or 5, further comprising a compensating field generator (29, 39) having a first and a second compensating field outputs, wherein the end portions and the compensating field outputs are positioned, when projected on to the plane, so that the end portions are provided on one side of the curve and the compensating field outputs on an opposite side of the curve.

7. An assembly of a card (10) and a card reader (50), the card having an outer, at least substantially straight side, the card reader comprising a reading head configured to be positioned over a straight line, being at least substantially parallel to the side and positioned between 6.9mm and 7.2mm from the side or between 10.2 and 10.5mm from the side, of the card while sensing the electromagnetic field and to output a signal relating to the field sensed,
**characterized in that** the card comprises an oblong field generator comprising at least two end portions having a width, perpendicular to a longitudinal axis of the generator, of at least 1.8mm and being configured to output at least part of the electromagnetic field,
and **in that** the end portions are positioned so that, when projected on to a plane of the surface:
- an edge of each end portion is positioned no more than 0.5mm from the straight line and/or
- the straight line does not overlap the end portions in the projection.

8. An assembly according to claim 7, wherein the reading head comprises at least a first and a second field sensor (52, 54), where the first field sensor is configured to travel along the straight line and the second field sensor is configured to travel along a curve, the card being configured to provide an additional electromagnetic field along the curve on or at the surface, the card comprising a second oblong field generator (30) with two second end portions configured to output at least part of the additional electromagnetic field,
wherein the second end portions are positioned so that, when projected on to a plane of the surface:
- an edge of each second end portion is positioned no more than 0.5mm from the curve and/or
- the curve does not overlap the second end portions in the projection.

9. A method of outputting a signal from a card according to any of claims 1-6, the method comprising the step of operating the field generator to output a magnetic field.

10. A method according to claim 9, wherein the operating step comprises operating the field generator to output a magnetic field which varies over time.

11. A method of transferring information from a card to a card reader head comprising a reading head, the card having an outer, at least substantially straight side, the method comprising:
- positioning the reading head directly above a straight line, being at least substantially parallel to the side and positioned between 6.9mm and 7.2mm from the side or between 10.2 and 10.5mm from the side,
- operating the field generator of the card to output a magnetic field so that at least a part of the magnetic field enters the reading head, and where the card reader outputs a signal corresponding to the at least part of the magnetic field entering the reading head,
wherein the operating step comprises operating a field generator comprising at least two end portions configured to output at least part of the electromagnetic field,
**characterized in that** the end portions have a width, perpendicular to a longitudinal direction of the generator, of at least 1.8mm and are positioned so that, when projected on to a plane of the surface:
- an edge of each end portion is positioned no more than 0.5mm from the straight line and/or
- the straight line does not overlap the end portions in the projection .

12. A method according to claim 11, wherein the positioning step comprises translating the reading head in relation to the card.

13. A card according to claim 1, wherein the edge is a portion of or at the end portion which extends in a longitudinal direction of the oblong field generator.

14. An assembly according to claim 7, wherein the edge is a portion of or at the end portion which extends in a longitudinal direction of the oblong field generator.

15. A method according to claim 11, wherein the edge is a portion of or at the end portion which extends in a longitudinal direction of the oblong field generator.

## Patentansprüche

1. Karte (10), die eine äußere, wenigstens im Wesentlichen gerade Seite (16) aufweist und dafür ausgebildet ist, ein elektromagnetisches Feld entlang einer Geraden (121, 122) auf oder an einer Fläche derselben bereitzustellen, wobei die Gerade wenigstens im Wesentlichen parallel zu der Seite ist und in einem Abstand zwischen 6,9 mm und 7,2 mm von der Seite oder zwischen 10,2 und 10,5 mm von der Seite positioniert ist, wobei die Karte einen länglichen Feldgenerator (20, 30) umfasst, der wenigstens zwei Endabschnitte (20', 20") umfasst, die dafür ausgebildet sind, wenigstens einen Teil des elektromagnetischen Feldes auszugeben,
**dadurch gekennzeichnet, dass** die Endabschnitte eine Breite, senkrecht zu einer Längsrichtung des Feldgenerators, von wenigstens 1,8 mm aufweisen und so positioniert sind, dass, wenn sie auf eine Ebene der Fläche projiziert werden:
- ein Rand jedes Endabschnitts nicht mehr als 0,5 mm von der Geraden entfernt positioniert ist, und/oder
- die Gerade sich in der Projektion nicht mit den Endabschnitten überschneidet.

2. Karte nach einem der vorhergehenden Ansprüche, wobei sich die Gerade zwischen einem ersten Endpunkt und einem zweiten Endpunkt auf oder an der Fläche erstreckt und wobei die Endabschnitte so positioniert sind, dass der erste und der zweite Endpunkt, wenn sie auf eine Gerade durch die Endabschnitte projiziert werden, zwischen den Endabschnitten positioniert sind.

3. Karte nach einem der vorhergehenden Ansprüche, wobei der Feldgenerator ein Kernmaterial (22) umfasst, das sich innerhalb einer Spule (24) erstreckt.

4. Karte nach einem der vorhergehenden Ansprüche, wobei die Karte dafür ausgebildet ist, ein zusätzliches elektromagnetisches Feld entlang einer vorbestimmten Kurve auf oder an der Fläche bereitzustellen, wobei die Karte einen zweiten länglichen Feldgenerator (30) mit zwei zweiten Endabschnitten umfasst, die eine Breite in einer zu einer Längsrichtung des Generators senkrechten Richtung von wenigstens 1,8 mm aufweisen und dafür ausgebildet sind, wenigstens einen Teil des zusätzlichen elektromagnetischen Feldes auszugeben,
wobei die zweiten Endabschnitte so positioniert sind, dass, wenn sie auf die Ebene der Fläche projiziert werden:
- ein Rand jedes zweiten Endabschnitts nicht mehr als 0,5 mm von der vorbestimmten Kurve entfernt positioniert ist, und/oder
- die vorbestimmte Kurve sich in der Projektion nicht mit den zweiten Endabschnitten überschneidet.

5. Karte nach Anspruch 4, wobei die Kurve eine Gerade ist, die wenigstens im Wesentlichen parallel zu der Seite ist und in einem Abstand zwischen 10,2 mm und 10,5 mm von der Seite positioniert ist.

6. Karte nach Anspruch 4 oder 5, welche ferner einen Kompensationsfeldgenerator (29, 39) umfasst, der einen ersten und einen zweiten Kompensationsfeldausgang aufweist, wobei die Endabschnitte und die Kompensationsfeldausgänge, wenn sie auf die Ebene projiziert werden, so positioniert sind, dass die Endabschnitte auf einer Seite der Kurve und die Kompensationsfeldausgänge auf einer gegenüberliegenden Seite der Kurve vorgesehen sind.

7. Anordnung einer Karte (10) und eines Kartenlesers (50), wobei die Karte eine äußere, wenigstens im Wesentlichen gerade Seite aufweist, wobei der Kartenleser einen Lesekopf umfasst, der dafür ausgebildet ist, über einer Geraden der Karte positioniert zu werden, die wenigstens im Wesentlichen parallel zu der Seite ist und in einem Abstand zwischen 6,9 mm und 7,2 mm von der Seite oder zwischen 10,2 und 10,5 mm von der Seite positioniert ist, während er das elektromagnetische Feld erfasst, und ein Signal auszugeben, welches das erfasste Feld betrifft,
**dadurch gekennzeichnet, dass** die Karte einen länglichen Feldgenerator umfasst, der wenigstens zwei Endabschnitte umfasst, die eine Breite, senkrecht zu einer Längsachse des Generators, von wenigstens 1,8 mm aufweisen und dafür ausgebildet sind, wenigstens einen Teil des elektromagnetischen Feldes auszugeben,
und dadurch, dass die Endabschnitte so positioniert sind, dass, wenn sie auf eine Ebene der Fläche projiziert werden:
- ein Rand jedes Endabschnitts nicht mehr als 0,5 mm von der Geraden entfernt positioniert ist, und/oder
- die Gerade sich in der Projektion nicht mit den Endabschnitten überschneidet.

8. Anordnung nach Anspruch 7, wobei der Lesekopf wenigstens einen ersten und einen zweiten Feldsensor (52, 54) umfasst, wobei der erste Feldsensor dafür ausgebildet ist, sich entlang der Geraden zu bewegen, und der zweite Feldsensor dafür ausgebildet ist, sich entlang einer Kurve zu bewegen, wobei die Karte dafür ausgebildet ist, ein zusätzliches elektromagnetisches Feld entlang der Kurve auf oder an der Fläche bereitzustellen, wobei die Karte einen zweiten länglichen Feldgenerator (30) mit zwei zweiten Endabschnitten umfasst, die dafür ausgebildet sind, wenigstens einen Teil des zusätzlichen elektromagnetischen Feldes auszugeben,
wobei die zweiten Endabschnitte so positioniert sind, dass, wenn sie auf eine Ebene der Fläche projiziert werden:
- ein Rand jedes zweiten Endabschnitts nicht mehr als 0,5 mm von der Kurve entfernt positioniert ist, und/oder
- die Kurve sich in der Projektion nicht mit den zweiten Endabschnitten überschneidet.

9. Verfahren zum Ausgeben eines Signals von einer Karte nach einem der Ansprüche 1-6, wobei das Verfahren den Schritt des Betreibens des Feldgenerators, um ein Magnetfeld auszugeben, umfasst.

10. Verfahren nach Anspruch 9, wobei der Schritt des Betreibens das Betreiben des Feldgenerators, um ein Magnetfeld auszugeben, welches sich mit der Zeit verändert, umfasst.

11. Verfahren zum Übertragen von Informationen von einer Karte zu einem Kartenleser, der einen Lesekopf umfasst, wobei die Karte eine äußere, wenigstens im Wesentlichen gerade Seite aufweist, wobei das Verfahren umfasst:
- Positionieren des Lesekopfes direkt über einer Geraden, die wenigstens im Wesentlichen parallel zu der Seite ist und in einem Abstand zwischen 6,9 mm und 7,2 mm von der Seite oder zwischen 10,2 und 10,5 mm von der Seite positioniert ist,
- Betreiben des Feldgenerators der Karte, um ein Magnetfeld auszugeben, so dass wenigstens ein Teil des Magnetfeldes in den Lesekopf eintritt, und wobei der Kartenleser ein Signal ausgibt, das dem wenigstens einen Teil des Magnetfeldes entspricht, der in den Lesekopf eintritt,
wobei der Schritt des Betreibens das Betreiben eines Feldgenerators umfasst, der wenigstens zwei Endabschnitte umfasst, die dafür ausgebildet sind, wenigstens einen Teil des elektromagnetischen Feldes auszugeben,
**dadurch gekennzeichnet, dass** die Endabschnitte eine Breite, senkrecht zu einer Längsrichtung des Generators, von wenigstens 1,8 mm aufweisen und so positioniert sind, dass, wenn sie auf eine Ebene der Fläche projiziert werden:
- ein Rand jedes Endabschnitts nicht mehr als 0,5 mm von der Geraden entfernt positioniert ist, und/oder
- die Gerade sich in der Projektion nicht mit den Endabschnitten überschneidet.

12. Verfahren nach Anspruch 11, wobei der Schritt des Positionierens eine Translationsbewegung des Lesekopfes bezüglich der Karte umfasst.

13. Karte nach Anspruch 1, wobei der Rand ein Abschnitt des Endabschnitts oder am Endabschnitt ist, welcher sich in einer Längsrichtung des länglichen Feldgenerators erstreckt.

14. Anordnung nach Anspruch 7, wobei der Rand ein Abschnitt des Endabschnitts oder am Endabschnitt ist, welcher sich in einer Längsrichtung des länglichen Feldgenerators erstreckt.

15. Verfahren nach Anspruch 11, wobei der Rand ein Abschnitt des Endabschnitts oder am Endabschnitt ist, welcher sich in einer Längsrichtung des länglichen Feldgenerators erstreckt.

## Revendications

1. Carte (10) ayant un côté extérieur au moins sensiblement rectiligne (16) et configurée pour fournir un champ électromagnétique le long d'une ligne droite (121, 122) sur ou au niveau d'une surface de celle-ci, la ligne droite étant au moins sensiblement parallèle au côté et positionnée entre 6,9 mm et 7,2 mm par rapport au côté ou entre 10,2 et 10,5 mm par rapport au côté, la carte comprenant un générateur de champ oblong (20, 30) comprenant au moins deux parties d'extrémité (20', 20") configuré pour produire au moins une partie du champ électromagnétique,
**caractérisée en ce que** les parties d'extrémité ont une largeur, perpendiculaire à une direction longitudinale du générateur de champ, d'au moins 1,8 mm et sont positionnées de manière à ce que, lorsque projetées sur un plan de la surface :
- un bord de chaque partie d'extrémité est positionné à pas plus de 0,5 mm par rapport à la ligne droite et/ou
- que la ligne droite ne se superpose pas aux parties d'extrémité dans la projection.

2. Carte selon l'une quelconque des revendications précédentes, dans laquelle la ligne droite s'étend entre un premier point d'extrémité et un deuxième point d'extrémité sur ou au niveau de la surface et dans lequel les parties d'extrémité sont positionnées de manière à ce que les premier et deuxième points d'extrémité, lorsqu'en projection sur une ligne droite via les parties d'extrémité, soient positionnés entre les parties d'extrémité.

3. Carte selon l'une quelconque des revendications précédentes, dans laquelle le générateur de champ comprend un matériau de noyau (22) s'étendant à l'intérieur d'une bobine (24).

4. Carte selon l'une quelconque des revendications précédentes, la carte étant configurée pour fournir un champ électromagnétique additionnel le long d'une courbe prédéterminée sur ou au niveau de la surface, la carte comprenant un deuxième générateur de champ oblong (30) avec deux deuxièmes parties d'extrémité ayant une largeur, dans une direction perpendiculaire à une direction longitudinale du générateur, d'au moins 1,8 mm et configuré pour produire au moins une partie du champ électromagnétique additionnel,
dans laquelle les deuxièmes parties d'extrémité sont positionnées de manière à ce que, lorsque projetées sur le plan de la surface .
- un bord de chaque deuxième partie d'extrémité est positionné à pas plus de 0,5 mm par rapport à la courbe prédéterminée et/ou
- que la courbe prédéterminée ne se superpose pas aux deuxièmes parties d'extrémité dans la projection.

5. Carte selon la revendication 4, dans laquelle la courbe est une ligne droite au moins sensiblement parallèle au côté et positionnée entre 10,2 mm et 10,5 mm par rapport au côté.

6. Carte selon la revendication 4 ou 5, comprenant en outre un générateur de champ de compensation (29, 39) ayant des première et deuxième sorties de champ de compensation, dans laquelle les parties d'extrémité et les sorties de champ de compensation sont positionnées, lorsque projetées sur le plan, de manière à ce que les parties d'extrémité soient fournies sur un côté de la courbe et les sorties de champ de compensation sur un côté opposé de la courbe.

7. Assemblage d'une carte (10) et d'un lecteur de carte (50), la carte ayant un côté extérieur au moins sensiblement rectiligne, le lecteur de carte comprenant une tête de lecture configurée pour être positionnée au-dessus d'une ligne droite, qui est au moins sensiblement parallèle au côté et positionnée entre 6,9 mm et 7,2 mm par rapport au côté ou entre 10,2 et 10,5 mm par rapport au côté, de la carte tout en détectant le champ électromagnétique et pour faire sortir un signal relatif au champ détecté,
**caractérisé en ce que** la carte comprend un générateur de champ oblong comprenant au moins deux parties d'extrémité ayant une largeur, perpendiculaire à un axe longitudinal du générateur, d'au moins 1,8 mm et configuré pour produire au moins une partie du champ électromagnétique,
et **en ce que** les parties d'extrémité sont positionnées de manière à ce que, lorsque projetées sur un plan de la surface .
- un bord de chaque partie d'extrémité est positionné à pas plus de 0,5 mm par rapport à la ligne droite et/ou
- que la ligne droite ne se superpose pas aux parties d'extrémité dans la projection.

8. Assemblage selon la revendication 7, dans lequel la tête de lecture comprend au moins un premier et un deuxième capteur de champ (52, 54), dans lequel le premier capteur de champ est configuré pour se déplacer le long de la ligne droite et le deuxième capteur de champ étant configuré pour se déplacer le long d'une courbe, la carte étant configurée pour fournir un champ électromagnétique additionnel le long de la courbe sur ou au niveau de la surface, la carte comprenant un deuxième générateur de champ oblong (30) avec deux deuxièmes parties d'extrémité configurées pour produire au moins une partie du champ électromagnétique additionnel,
dans lequel les deuxièmes parties d'extrémité sont positionnées de manière à ce que, lorsque projetées sur un plan de la surface :
- un bord de chaque deuxième partie d'extrémité est positionné à pas plus de 0,5 mm de la courbe et/ou
- que la courbe ne se superpose pas aux deuxièmes parties d'extrémité dans la projection.

9. Procédé pour faire sortir un signal d'une carte selon l'une quelconque des revendications 1-6, le procédé comprenant l'étape de mise en service du générateur de champ pour produire un champ magnétique.

10. Procédé selon la revendication 9, dans lequel l'étape de mise en service comprend la mise en service du générateur de champ pour produire un champ magnétique qui varie dans le temps.

11. Procédé de transfert d'informations d'une carte vers une tête de lecteur de carte comprenant une tête de lecture, la carte ayant un côté extérieur au moins sensiblement rectiligne, le procédé comprenant :
- le positionnement de la tête de lecture directement au-dessus d'une ligne droite, au moins sensiblement parallèle au côté et positionnée entre 6,9 mm et 7,2 mm par rapport au côté ou entre 10,2 et 10,5 mm par rapport au côté,
- la mise en service du générateur de champ de la carte pour produire un champ magnétique de manière à ce qu'au moins une partie du champ magnétique entre dans la tête de lecture, et où le lecteur de carte fait sortir un signal correspondant au moins à la partie du champ magnétique entrant dans la tête de lecture,
dans lequel l'étape de mise en service comprend la mise en service d'un générateur de champ comprenant au moins deux parties d'extrémité configurées pour produire au moins une partie du champ électromagnétique,
**caractérisé en ce que** les parties d'extrémité ont une largeur, perpendiculaire à une direction longitudinale du générateur, d'au moins 1,8 mm et sont positionnées de manière à ce que, lorsque projetées sur un plan de la surface :
- un bord de chaque partie d'extrémité est positionné à pas plus de 0,5 mm par rapport à la ligne droite et/ou
- que la ligne droite ne se superpose pas aux parties d'extrémité dans la projection.

12. Procédé selon la revendication 11, dans lequel l'étape de positionnement comprend la translation de la tête de lecture relativement à la carte.

13. Carte selon la revendication 1, dans laquelle le bord est une partie de la partie d'extrémité, ou au niveau de celle-ci, qui s'étend dans une direction longitudinale du générateur de champ oblong.

14. Assemblage selon la revendication 7, dans lequel le bord est une partie de la partie d'extrémité, ou au niveau de celle-ci, qui s'étend dans une direction longitudinale du générateur de champ oblong.

15. Procédé selon la revendication 11, dans lequel le bord est une partie de la partie d'extrémité, ou au niveau de celle-ci, qui s'étend dans une direction longitudinale du générateur de champ oblong.
